# EUROPEAN PATENT SPECIFICATION

(11) **EP 2 938 828 B1**
(45) Date of publication and mention of the grant of the patent: **21.10.2026**
(21) Application number: 13867031.0
(22) Date of filing: 15.03.2013
(51) Int. Cl.: F01D 5/14, F02C 7/00, F01D 5/18

(54) **GAS TURBINE ENGINE COMPONENT HAVING VASCULAR ENGINEERED LATTICE STRUCTURE**
GASTURBINENMOTORKOMPONENTE MIT VASKULÄRER MANIPULIERTER GITTERSTRUKTUR
COMPOSANT DE MOTEUR À TURBINE À GAZ À STRUCTURE MAILLÉE VASCULAIRE ARTIFICIELLE

(30) Priority: 28.12.2012 US 201261746893 P; 28.01.2013 US 201361757441 P
(43) Date of publication of application: 04.11.2015
(73) Proprietor: RTX Corporation, Farmington, CT 06032 (US)
(72) Inventor: MONGILLO, Dominic J., West Hartford, Connecticut 06107 (US); PROPHETER-HINCKLEY, Tracy A., Manchester, Connecticut 06042 (US); ZELESKY, Mark F., Bolton, Connecticut 06043 (US); WAGNER, Joel H., Wethersfield, Connecticut 06109 (US); SLAVENS, Thomas N., Moodus, CT 06469 (US)
(74) Representative: Dehns
(86) International application number: PCT/US2013/032003
(87) International publication number: WO 2014/105108

(56) References cited:
- EP-A1- 2 199 725
- US-A- 4 642 993
- US-A- 5 752 801
- US-A1- 2011 262 695
- US-A1- 2011 268 580
- US-B1- 6 508 623
- US-B2- 7 540 710
- US-B2- 7 665 956

## Description

### BACKGROUND

This disclosure relates to a gas turbine engine, and more particularly to a gas turbine engine component having an engineered vascular structure.

Gas turbine engines typically include a compressor section, a combustor section and a turbine section. In general, during operation, air is pressurized in the compressor section and is mixed with fuel and burned in the combustor section to generate hot combustion gases. The hot combustion gases flow through the turbine section, which extracts energy from the hot combustion gases to power the compressor section and other gas turbine engine loads.

Due to exposure to hot combustion gases, numerous components of a gas turbine engine may include cooling schemes that circulate airflow to cool the component during engine operation. Thermal energy is transferred from the component to the airflow as the airflow circulates through the cooling scheme to cool the component. Known cooling schemes may be inefficient and lack structural integrity.

EP-2199725-A1 discloses a prior art multi-impingement surface for cooling a wall.

US-4642993-A discloses a prior art combustor liner wall.

US-7665956-B2 discloses a prior art wall cooling arrangement.

### SUMMARY

From a first aspect, the invention provides a component as set forth in claim 1.

**In** a further non-limiting embodiment of the foregoing components, the one or more nodes and branches are uniformly distributed throughout the vascular engineered lattice structure.

**In** a further non-limiting embodiment of either of the foregoing components, the one or more nodes and branches are non-uniformly distributed throughout the vascular engineered lattice structure.

**In** a non-limiting embodiment, the branches are orthogonal to the nodes.

**In** an alternative non-limiting embodiment of any of the foregoing components, the branches are non-orthogonal to the nodes.

**In** a further non-limiting embodiment of any of the foregoing components, the vascular engineered lattice structure is one of a co-flow vascular engineered lattice structure and a counter-flow vascular engineered lattice structure.

**In** a further non-limiting embodiment of any of the foregoing components, the outlet hole is a film cooling hole.

**In** a further non-limiting embodiment of any of the foregoing components, the wall is part of a blade, a vane, a blade outer air seal (BOAS), a combustor panel or a turbine exhaust case liner of a gas turbine engine.

**In** a further non-limiting embodiment of any of the foregoing components, the at least one inlet hole includes a different shape and geometry from the at least one outlet hole.

The invention also provides a method for producing a component, as set forth in claim 9.

In a non-limiting embodiment of the foregoing method, the step of forming the vascular engineered lattice structure includes forming a core using an additive manufacturing process and using the core to cast the vascular engineered lattice structure.

The various features and advantages of this disclosure will become apparent to those skilled in the art from the following detailed description. The drawings that accompany the detailed description can be briefly described as follows.

### BRIEF DESCRIPTION OF THE DRAWINGS

Figure 1 illustrates a schematic, cross-sectional view of a gas turbine engine.
Figure 2 illustrates a component that can be incorporated into a gas turbine engine.
Figure 3 shows one exemplary engineered vascular structure of a gas turbine engine component in accordance with the invention.
Figure 4 illustrates another view of the engineered vascular structure of Figure 3.
Figure 5 shows additional features of an engineered vascular structure in accordance with the invention.
Figure 6 illustrates an engineered vascular structure outside the scope of the invention.
Figure 7 illustrates another view of the engineered vascular structure of Figure 6.
Figure 8 illustrates another engineered vascular structure embodiment in accordance with the invention having a co-flow design.
Figure 9 illustrates another embodiment of an engineered vascular structure in accordance with the invention embodying a counter-flow design.
Figure 10 illustrates yet another exemplary vascular engineered lattice structure in accordance with the invention.

### DETAILED DESCRIPTION

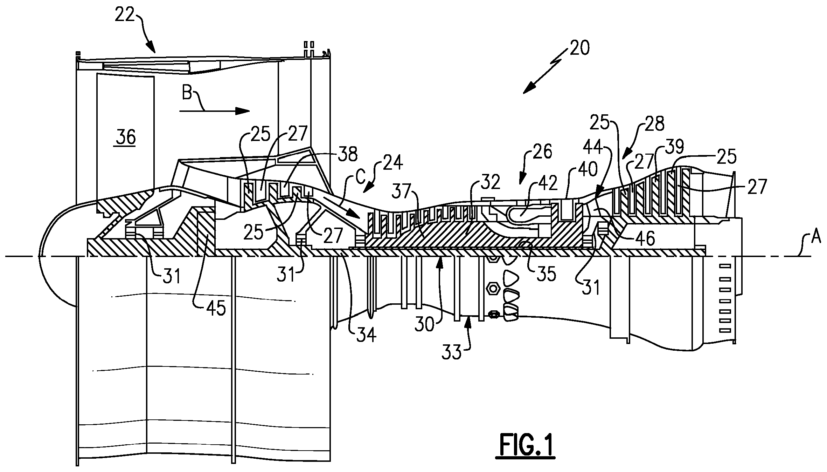

Figure 1 schematically illustrates a gas turbine engine 20. The exemplary gas turbine engine 20 is a two-spool turbofan engine that generally incorporates a fan section 22, a compressor section 24, a combustor section 26 and a turbine section 28. Alternative engines might include an augmenter section (not shown) among other systems for features. The fan section 22 drives air along a bypass flow path B, while the compressor section 24 drives air along a core flow path C for compression and communication into the combustor section 26. The hot combustion gases generated in the combustor section 26 are expanded through the turbine section 28. Although depicted as a turbofan gas turbine engine in the
disclosed non-limiting embodiment, it should be understood that the concepts described herein are not limited to turbofan engines and these teachings could extend to other types of engines, including but not limited to, three-spool engine architectures.

The gas turbine engine 20 generally includes a low speed spool 30 and a high speed spool 32 mounted for rotation about an engine centerline longitudinal axis A. The low speed spool 30 and the high speed spool 32 may be mounted relative to an engine static structure 33 via several bearing systems 31. It should be understood that other bearing systems 31 may alternatively or additionally be provided.

The low speed spool 30 generally includes an inner shaft 34 that interconnects a fan 36, a low pressure compressor 38 and a low pressure turbine 39. The inner shaft 34 can be connected to the fan 36 through a geared architecture 45 to drive the fan 36 at a lower speed than the low speed spool 30. The high speed spool 32 includes an outer shaft 35 that interconnects a high pressure compressor 37 and a high pressure turbine 40. In this embodiment, the inner shaft 34 and the outer shaft 35 are supported at various axial locations by bearing systems 31 positioned within the engine static structure 33.

A combustor 42 is arranged between the high pressure compressor 37 and the high pressure turbine 40. A mid-turbine frame 44 may be arranged generally between the high pressure turbine 40 and the low pressure turbine 39. The mid-turbine frame 44 can support one or more bearing systems 31 of the turbine section 28. The mid-turbine frame 44 may include one or more airfoils 46 that extend within the core flow path C.

The inner shaft 34 and the outer shaft 35 are concentric and rotate via the bearing systems 31 about the engine centerline longitudinal axis A, which is colinear with their longitudinal axes. The core airflow is compressed by the low pressure compressor 38 and the high pressure compressor 37, is mixed with fuel and burned in the combustor 42, and is then expanded over the high pressure turbine 40 and the low pressure turbine 39. The high pressure turbine 40 and the low pressure turbine 39 rotationally drive the respective high speed spool 32 and the low speed spool 30 in response to the expansion.

The pressure ratio of the low pressure turbine 39 can be pressure measured prior to the inlet of the low pressure turbine 39 as related to the pressure at the outlet of the low pressure turbine 39 and prior to an exhaust nozzle of the gas turbine engine 20. In one non-limiting embodiment, the bypass ratio of the gas turbine engine 20 is greater than about ten (10:1), the fan diameter is significantly larger than that of the low pressure compressor 38, and the low pressure turbine 39 has a pressure ratio that is greater than about five (5:1). It should be understood, however, that the above parameters are only exemplary of one embodiment of a geared architecture engine and that the present disclosure is applicable to other gas turbine engines, including direct drive turbofans.

In this embodiment of the exemplary gas turbine engine 20, a significant amount of thrust is provided by the bypass flow path B due to the high bypass ratio. The fan section 22 of the gas turbine engine 20 is designed for a particular flight condition--typically cruise at about 0.8 Mach and about 35,000 feet (10668 m). This flight condition, with the gas turbine engine 20 at its best fuel consumption, is also known as bucket cruise Thrust Specific Fuel Consumption (TSFC). TSFC is an industry standard parameter of fuel consumption per unit of thrust.

Fan Pressure Ratio is the pressure ratio across a blade of the fan section 22 without the use of a Fan Exit Guide Vane system. The low Fan Pressure Ratio according to one non-limiting embodiment of the example gas turbine engine 20 is less than 1.45. Low Corrected Fan Tip Speed is the actual fan tip speed divided by an industry standard temperature correction of [(Tram °R) / (518.7 °R)]^{0.5}. The Low Corrected Fan Tip Speed according to one non-limiting embodiment of the example gas turbine engine 20 is less than about 1150 fps (351 m/s).

Each of the compressor section 24 and the turbine section 28 may include alternating rows of rotor assemblies and vane assemblies (shown schematically) that carry airfoils that extend into the core flow path C. For example, the rotor assemblies can carry a plurality of rotating blades 25, while each vane assembly can carry a plurality of vanes 27 that extend into the core flow path C. The blades 25 create or extract energy (in the form of pressure) from the core airflow that is communicated through the gas turbine engine 20 along the core flow path C. The vanes 27 direct the core airflow to the blades 25 to either add or extract energy.

Various components of the gas turbine engine 20, including but not limited to the airfoils of the blades 25 and the vanes 27 of the compressor section 24 and the turbine section 28, may be subjected to repetitive thermal cycling under widely ranging temperatures and pressures. The hardware of the turbine section 28 is particularly subjected to relatively extreme operating conditions. Therefore, some components may require internal cooling schemes for cooling the parts during engine operation.

Among other features, this disclosure relates to gas turbine engine component cooling schemes that include vascular engineered lattice structures inside the walls of the gas turbine engine component. The exemplary structures described herein provide effective localized convective cooling, and is some embodiments, can provide resupply and film cooling for gas turbine engine components that may be subject to the hot combustion gases that are communicated through the core flow path C.

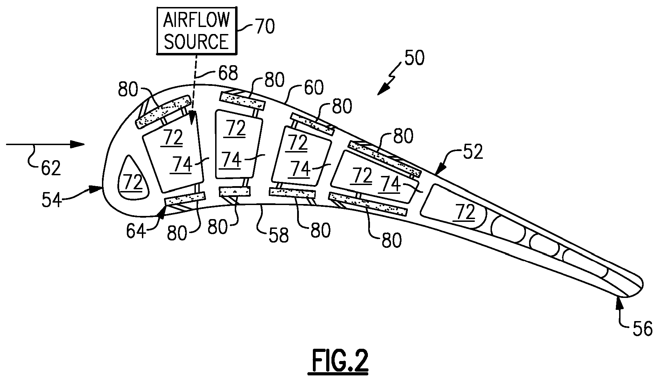

Figure 2 illustrates a component 50 that can be incorporated into a gas turbine engine, such as the gas turbine engine 20 of Figure 1. The component 50 includes a body portion 52 that axially extends between a leading edge portion 54 and a trailing edge portion 56. The body portion 52 may further include a first (pressure) side wall 58 and a second (suction) side wall 60 that are spaced apart from one another and axially extend between the leading edge portion 54 and the trailing edge portion 56. Although shown in cross-section, the body portion 52 would also extend radially across a span.

In this embodiment, the body portion 52 is representative of an airfoil. For example, the body portion 52 could be an airfoil that extends from platform and root portions (i.e., where the component is a blade), or could alternatively extend between inner and outer platforms (i.e., where the component 50 is a vane). In yet another embodiment, the component 50 could include a non-airfoil component, including but not limited to, a blade outer air seal (BOAS), a combustor liner, a turbine exhaust case liner, or any other part that may require dedicated cooling.

A gas path 62 is communicated axially downstream through the gas turbine engine 20 in a direction that extends from the leading edge portion 54 toward the trailing edge portion 56 of the body portion 52. The gas path 62 represents the communication of core airflow along the core flow path C (see Figure 1).

A cooling scheme 64 may be disposed inside of the body portion 52 for cooling the internal and external surface areas of the component 50. For example, the cooling scheme 64 can include one or more cavities 72 that may radially, axially and/or circumferentially extend inside of the body portion 52 to establish cooling passages for receiving an airflow 68 (or some other fluid). The airflow 68 may be communicated into one or more of the cavities 72 from an airflow source 70 that is external to the component 50 to cool the component 50. In one embodiment, the airflow 68 is communicated to the cooling scheme 64 through a root portion of the component 50 (e.g., where the component is a blade).

The airflow 68 is generally of a lower temperature than the airflow of the gas path 62 that is communicated across the body portion 52. In one particular embodiment, the airflow 68 is a bleed airflow that can be sourced from the compressor section 24 or any other portion of the gas turbine engine 20 that has a lower temperature as compared to the component 50. The airflow 68 can be circulated through the cooling scheme 64 to transfer thermal energy from the component 50 to the airflow 68 thereby cooling the component 50.

In this non-limiting embodiment, the exemplary cooling scheme 64 includes a plurality of cavities 72 that extend inside of the body portion 52. However, the cooling scheme 64 is not necessarily limited to the configuration shown, and it will be appreciated that a greater or fewer number of cavities, including only a single cavity, may be defined inside of the body portion 52. The cavities 72 communicate the airflow 68 through the cooling scheme 64, such as along a serpentine or linear path, to cool the body portion 52.

Ribs 74 may extend between the first side wall 58 and the second side wall 60 of the body portion 52. The ribs 74 may also radially extend across a span of the body portion 52.

The exemplary cooling scheme 64 may additionally include one or more vascular engineered lattice structures 80 that are disposed inside sections of the body portion 52 of the component 50. For example, discrete portions of the component 50 may embody a vascular engineered lattice structure, or the entire component 50 can be constructed of a vascular engineered lattice structure. Multiple embodiments of such vascular engineered lattice structures are described in detail below.

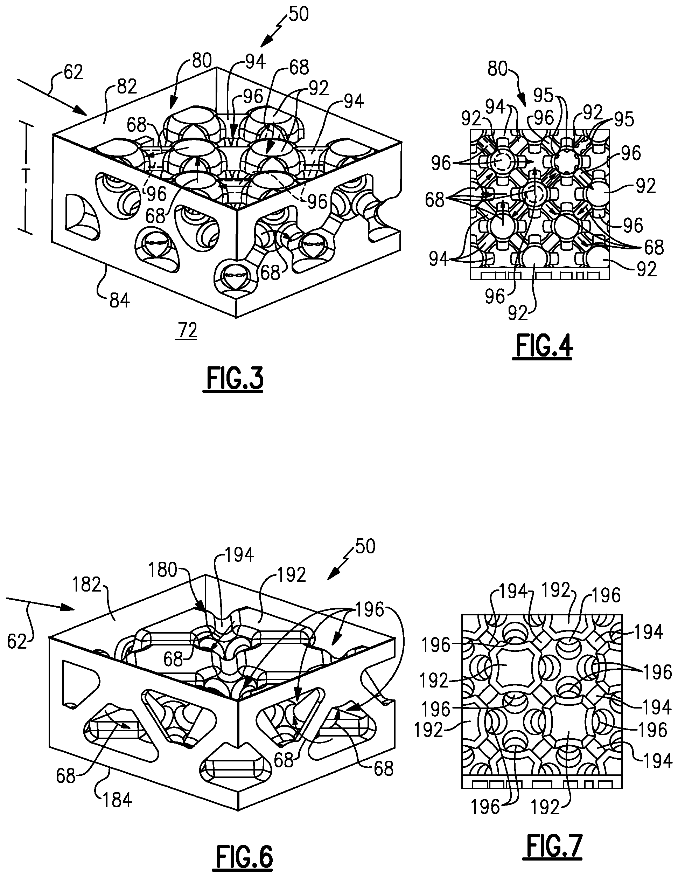

Figures 3 and 4 illustrate one exemplary vascular engineered lattice structure 80 in accordance with the invention that can be incorporated into a component 50. The vascular engineered lattice structure 80 may be incorporated into any section or sections of a gas turbine engine component. In this disclosure, the term "vascular engineered lattice structure" denotes a structure of known surface and flow areas that includes a specific structural integrity.

As discussed in greater detail below, the vascular engineered lattice structure 80 of Figures 3 and 4 is a hollow vascular structure. The hollow vascular structure shown in Figures 3 and 4 defines a solid material with discrete, interconnected cooling passages that are connected through common nodes to control the flow of airflow throughout the hollow vascular structure.

The specific design and configuration of the vascular engineered lattice structure 80 of Figure 3 is not intended to be limited to only the configuration shown. It will be appreciated that because the vascular engineered lattice structure 80 is an engineered structure, the vascular arrangement of these structures can be tailored to the specific cooling and structural needs of any given gas turbine engine component. **In** other words, the vascular engineered lattice structure 80 can be tailored to match external heat load and local life requirements by changing the design and density of the vascular engineered lattice structure 80. The actual design of any given vascular engineered lattice structure may depend on geometry requirements, pressure loss, local cooling flow, cooling air heat pickup, thermal efficiency, film effectiveness, overall cooling effectiveness, aerodynamic mixing, and produceability considerations, among other gas turbine engine specific parameters. **In** one embodiment, the vascular engineered lattice structure 80 is sized based on a minimum size that can be effectively manufactured and that is not susceptible to becoming plugged by dirt or other debris.

The exemplary vascular engineered lattice structure 80 extends between a first wall 82 and a second wall 84 of the component 50. The first wall 82 is spaced from the second wall 84. The first wall 82 may be exposed to the gas path 62, whereas the second wall 84 may be remotely positioned from the gas path 62. For example, the second wall 84 could face into one of the cooling source cavities 72 of the cooling scheme 64 (see Figure 2). The vascular engineered lattice structure 80 includes a thickness T between the first wall 82 and the second wall 84. The thickness T can be of any dimension.

Airflow 68 migrates through the vascular engineered lattice structure 80 to convectively cool the component 50. **In** this embodiment, the vascular engineered lattice structure 80 embodies a hollow configuration in which the airflow 68 may be circulated inside of the various passages defined by the vascular engineered lattice structure 80. For example, the hollow configuration of the vascular engineered lattice structure 80 may establish a porous flow area for the circulation of airflow 68. Additionally, airflow 68 could be communicated over and around the vascular engineered lattice structure 80.

The vascular engineered lattice structure 80 can be manufactured by using a variety of manufacturing techniques. For example, the vascular engineered lattice structure 80 may be created using an additive manufacturing process such as direct metal laser sintering (DMLS). Another additive manufacturing process that can be used to manufacture the vascular engineered lattice structure 80 is electron beam melting (EBM). In another embodiment, select laser sintering (SLS) or select laser melting (SLM) processes may be utilized.

In yet another embodiment, a casting process can be used to create the vascular engineered lattice structure 80. For example, an additive manufacturing process can be used to produce a molybdenum based Refractory Metal Core (RMC) that can be used to cast the vascular engineered lattice structure 80. In one embodiment, the additive manufacturing process includes utilizing a powder bed technology for direct fabrication of airfoil lattice geometry features, while in another embodiment, the additive manufacturing process can be used to produce "core" geometry features which can then be integrated and utilized directly in the investment casting process using a lost wax process.

The exemplary vascular engineered lattice structure 80 includes a plurality of nodes 92, a plurality of branches 94 that extend between the nodes 92, and a plurality of hollow passages 96 between the branches 94 and the nodes 92. The number, size and distribution of nodes 92, branches 94 and hollow passages 96 can vary from the specific configuration shown. In other words, the configuration illustrated by Figure 4 is but one possible design.

The branches 94 may extend orthogonally or non-orthogonally to the nodes 92. The nodes 92 and branches 94 can be manufactured as a single contiguous structure made of the same material. In one embodiment, the nodes 92 and branches 94 are uniformly distributed throughout the vascular engineered lattice structure 80. In another embodiment, the nodes 92 and branches 94 are non-uniformly distributed throughout the vascular engineered lattice structure 80.

In this "hollow lattice" structure configuration, airflow 68 can be circulated inside hollow passages 96 of the nodes 92 and the branches 94 to cool the component 50 in the space between the walls 82, 84 (see Figure 3). For example, the "hollow" lattice structure may include multiple continuous hollow spoke cavity passages 96 thru which airflow 68 is passed. The airflow 68 flows from each of the hollow branches 94 and coalesces into the nodes 92, which serve as a plenum for the airflow 68 to be redistributed to the next set of hollow branches 94 and nodes 92. The "hollow" lattice structure forms multiple circuitous continuous passages in which the airflow 68 flows to maximize the internal convective cooling surface area and coolant mixing. Additionally, airflow 68 could be communicated over and around the nodes 92 and branches 94 of the vascular engineered lattice structure 80.

The nodes 92 and the branches 94 additionally act as structural members that can be tailored to "tune" steady and unsteady airfoil vibration responses in order to resist and optimally manage steady and unsteady pressure forces, centrifugal bending and curling stresses, as well as provide for improved airfoil local and section average creep and untwist characteristics and capability. **In** one embodiment, one or more of the nodes 92 and branches 94 may include augmentation features 95 (shown schematically in Figure 4) that augment the heat transfer effect of the airflow 68 as it is communicated through the vascular engineered lattice structure 80. The augmentation features 95 can also be made using the additive manufacturing processes describe above.

As mentioned above, the vascular arrangement of the vascular engineered lattice structure 80 can be tailored to the specific cooling and structural needs of any given gas turbine engine component. For example, a first portion of the vascular engineered lattice structure 80 can include a different combination of nodes 92, branches 94 and hollow passages 96 compared to a second portion of the vascular engineered lattice structure 80. **In** one embodiment, a first portion of the vascular engineered lattice structure 80 may include a greater amount of cooling area whereas a second portion of the vascular engineered lattice structure 80 may provide a greater amount of structural area.

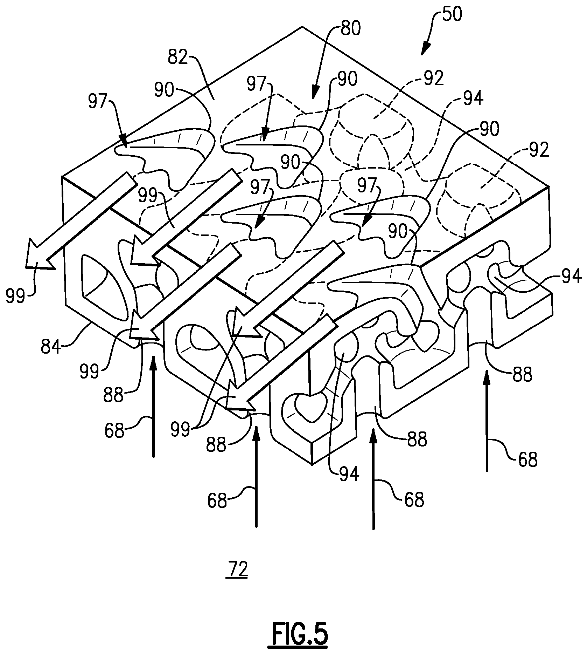

Referring to Figure 5, the vascular engineered lattice structure 80 can include one or more inlet holes 88 and outlet holes 90. **In** this embodiment, the inlet holes 88 extend through the second wall 84 and connect the vascular engineered lattice structure 80 to a cavity 72 of the component 50, and the outlet holes 90 are disposed at the first wall 82. Airflow 68 may be extracted from the cavity 72 as resupply air that is communicated through the inlet holes 88 and into the nodes 92 and branches 94 of the vascular engineered lattice structure 80. The airflow 68 may be circulated through the various nodes 92 and branches 94 to convectively cool the component 50. The airflow 68 may exit the vascular engineered lattice structure 80 through the outlet holes 90 as film cooling air 99.

Although multiple inlet holes 88 and outlet holes 90 are depicted, any number of such holes can be incorporated into the vascular engineered lattice structure 80. In this embodiment, the inlet holes 88 are round shaped and the outlet holes 90 are film cooling holes having multi-lobed diffusion sections 97. The geometry and shape of the inlet and outlet holes 88, 90 could embody other geometries and shapes within the scope of this disclosure. Film hole geometries of any shape can be manufactured in order to provide the necessary adiabatic film effectiveness and can include but are not limited to round, conical, cone, diffused shaped, multi-lobed and/or slot film cooling geometries. Moreover, the holes 88, 90 can be manufactured using an additive manufacturing process, including but not limited to, DMLS, EBM, SLS and SLM.

Figures 6 and 7 illustrate a vascular engineered lattice structure 180 falling outside the scope of the invention. The vascular engineered lattice structure 180 embodies a solid lattice structure in which airflow is communicated over and around the solid lattice structure thereby governing flow and providing structural support. The vascular engineered lattice structure 180 is disposed between a first wall 182 and a second wall 184 of the component 50.

The vascular engineered lattice structure 180 includes a plurality of nodes 192, a plurality of branches 194 that extend between the nodes 192, and a plurality of open passages 196 between the branches 194 and the nodes 192. The nodes 192, branches 194 and open passages 196 can be manufactured as a single contiguous structure made of the same material.
In this "solid" lattice structure configuration, airflow 68 can be circulated through the open passages 196 to cool the component 50 in the space between the walls 182, 184. In other words, in contrast to the hollow lattice structure embodiment which communicates airflow through the insides of the nodes 192 and branches 194, the airflow 68 is circulated over and around these parts as part of a porous flow area. For example, the "solid" lattice structure includes multiple continuous solid branches 194 over which airflow 68 is passed. The "solid" lattice structure forms circuitous passages for the airflow 68 to traverse around as it migrates through the vascular engineered lattice structure to maximize the convective cooling surface area and coolant mixing around the nodes 192 and the branches 194. The nodes 192 and the branches 194 additionally act as structural members that resist and dampen pressure, rotation forces, and vibratory loads.

The exemplary vascular engineered lattice structure 180 establishes a ratio of cooling area to structural area. The cooling area is established by the open passages 196, while the nodes 192 and branches 194 determine the amount of structural area. In one embodiment, the amount of cooling area exceeds the structural area (cooling area > structural area). In another embodiment, a ratio of the cooling area to the structural area is less than 1 (cooling area < structural area). In yet another embodiment, a ratio of the cooling area to the structural area is between 1 and 4. Other configurations are also contemplated.

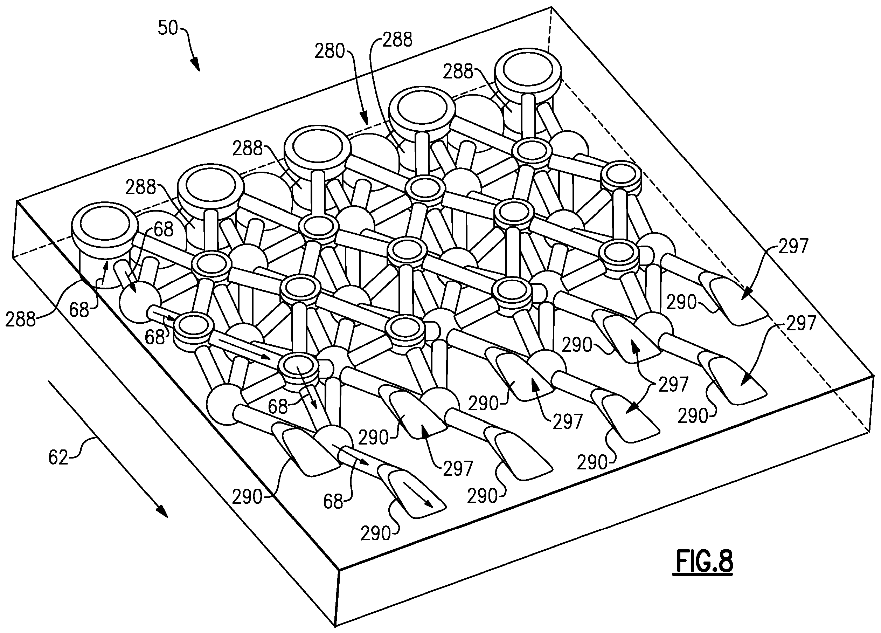

The vascular engineered lattice structures can be configured in either a co-flow or counter-flow heat exchanger design concepts. For example, Figure 8 depicts a vascular engineered lattice structure 280 providing a co-flow design. In other words, the airflow 68 is circulated through the vascular engineered lattice structure 280 in substantially the same direction as the gas path 62 flow direction. A hollow configuration is depicted.

This particular vascular engineered lattice structure 280 includes a plurality of inlet holes 288 and a plurality of outlet holes 290. The outlet holes 290 of this embodiment are positioned in staggered rows R1 and R2 and include shaped diffusion sections 297. Of course, a single row of outlet holes 290 could also be utilized. The outlet holes 290 may embody other diffusion shapes and geometries than are shown.

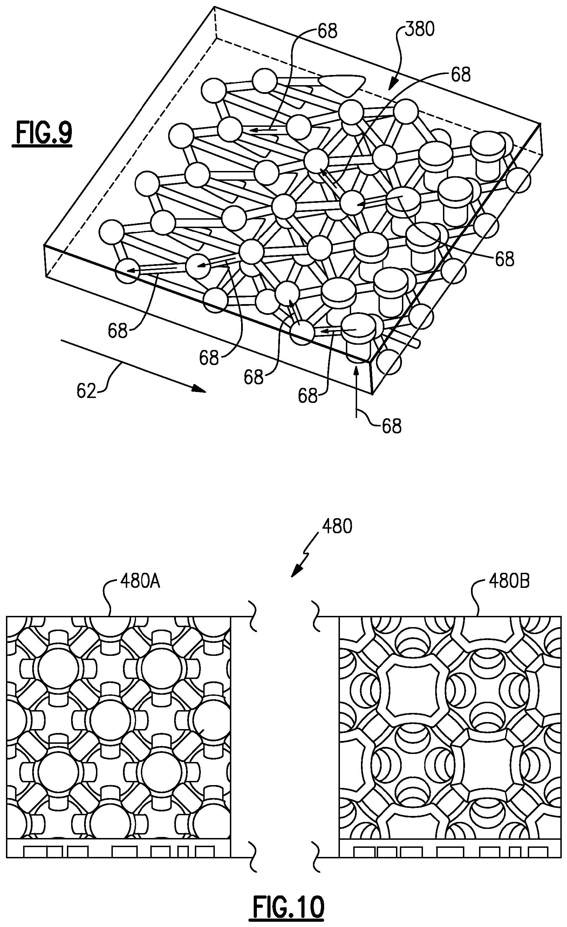

Figure 9 illustrates yet another exemplary vascular engineered lattice structure 380 in accordance with the invention that could be incorporated into a gas turbine engine component. In this embodiment, the vascular engineered lattice structure 380 provides a counter-flow design. In other words, the airflow 68 is circulated through the vascular engineered lattice structure 380 in a direction that is generally opposite to the flow direction of the gas path 62.

Figure 10 illustrates yet another exemplary vascular engineered lattice structure 480 in accordance with the invention that could be incorporated into a gas turbine engine component. In this embodiment, the vascular engineered lattice structure 480 includes a first portion 480A that can include a hollow lattice structure and a second portion 480B that can include a solid lattice structure. The distribution and interchangeability of the hollow and solid lattice structures is dependent on design requirements and other considerations.

The exemplary vascular engineered lattice structures described in this disclosure may be incorporated into any relatively high heat load gas turbine engine applications where both convective and film cooling is desired. Among other possible design configurations, the vascular engineered lattice structures of this disclosure may be implemented as a co-flow or counter-flow configurations and may either include or exclude airflow resupply to more efficiently provide localized convective cooling and film cooling to achieve extended component operating life.

Although the different non-limiting embodiments are illustrated as having specific components, the embodiments of this disclosure are not limited to those particular combinations. It is possible to use some of the components or features from any of the non-limiting embodiments in combination with features or components from any of the other non-limiting embodiments.

It should be understood that like reference numerals identify corresponding or similar elements throughout the several drawings. It should also be understood that although a particular component arrangement is disclosed and illustrated in these exemplary embodiments, other arrangements could also benefit from the teachings of this disclosure.

The foregoing description shall be interpreted as illustrative and not in any limiting sense. A worker of ordinary skill in the art would understand that certain modifications could come within the scope of this disclosure. For these reasons, the following claims should be studied to determine the true scope and content of this disclosure.

## Claims

1. A component (50), comprising:
a first wall (82);
a second wall (84) spaced from the first wall (82);
a vascular engineered lattice structure (80; 280; 380; 480) extending between said first wall (82) and said second wall (84), said vascular engineered lattice structure (80; 280; 380; 480) defining a hollow vascular structure configured to communicate a fluid through said vascular engineered lattice structure (80; 280; 380; 480), wherein:
said vascular engineered lattice structure (80; 280; 380; 480) has at least one inlet hole (88) and at least one outlet hole (90) that communicate the fluid into and out of said hollow vascular structure (80; 280; 380; 480); and
said hollow vascular structure (80; 280; 380; 480) includes hollow passages (96) that extend through nodes (92) and branches (94) of said vascular engineered lattice structure (80; 280; 380; 480), and airflow (68) can be circulated inside the hollow passages (96) of the nodes (92) and the branches (94) to cool the component (50) in the space between the walls (82, 84) and can flow from each of the hollow branches (96) and coalesce into nodes (92), which serve as a plenum for the airflow (68) to be redistributed to the next set of hollow branches (96) and nodes (92), **characterised in that**:
airflow (68) can be communicated over and around the nodes (92) and branches (94) of the vascular engineered lattice structure (80).

2. The component as recited in claim 1, wherein said nodes (92) and branches (94) are uniformly distributed throughout said vascular engineered lattice structure (80; 280; 380; 480).

3. The component as recited in claim 1, wherein said nodes (92) and branches (94) are non-uniformly distributed throughout said vascular engineered lattice structure (80; 280; 380; 480).

4. The component as recited in claim 2 or 3, wherein said branches (94) are:
orthogonal to said nodes (92); or
non-orthogonal to said nodes (92).

5. The component as recited in any preceding claim, wherein said vascular engineered lattice structure (80; 280; 380; 480) is one of a co-flow vascular engineered lattice structure (80; 280; 380; 480) and a counter-flow vascular engineered lattice structure (80; 280; 380; 480).

6. The component as recited in any preceding claim, wherein said outlet hole (90) is a film cooling hole.

7. The component as recited in any preceding claim, wherein said wall is part of a blade, a vane, a blade outer air seal (BOAS), a combustor panel or a turbine exhaust case liner of a gas turbine engine.

8. The component as recited in any preceding claim, wherein said at least one inlet hole (88) includes a different shape and geometry from said at least one outlet hole (90).

9. A method for producing a component (50), comprising the steps of:
forming a vascular engineered lattice structure (80; 280; 380; 480) between first and second walls (82, 84) of the component (50), said vascular engineered lattice structure (80; 280; 380; 480) having a hollow lattice structure and including at least one inlet hole (88) and at least one outlet hole (90) that communicate a fluid into and out of said vascular engineered lattice structure (80; 280; 380; 480), wherein said hollow vascular structure (80; 280; 380; 480) includes hollow passages (96) that extend through nodes (92) and branches (94) of said vascular engineered lattice structure (80; 280; 380; 480), and airflow (68) can be circulated inside the hollow passages (96) of the nodes (92) and the branches (94) to cool the component (50) in the space between the walls (82, 84) and can flow from each of the hollow branches (96) and coalesce into nodes (92), which serve as a plenum for the airflow (68) to be redistributed to the next set of hollow branches (96) and nodes (92), and airflow (68) can be communicated over and around the nodes (92) and branches (94) of the vascular engineered lattice structure (80).

10. The method as recited in claim 9, wherein the step of forming the vascular engineered lattice structure includes:
forming a core using an additive manufacturing process; and
using the core to cast the vascular engineered lattice structure (80; 280; 380; 480).

## Patentansprüche

1. Eine Komponente (50), umfassend:
eine erste Wand (82);
eine zweite Wand (84), die von der ersten Wand (82) beabstandet ist;
eine vaskuläre technische Gitterstruktur (80; 280; 380; 480), die sich zwischen der ersten Wand (82) und der zweiten Wand (84) erstreckt, wobei die vaskuläre technische Gitterstruktur (80; 280; 380; 480) eine hohle vaskuläre Struktur definiert, die konfiguriert ist, um ein Fluid durch die vaskuläre technische Gitterstruktur (80; 280; 380; 480) zu leiten, wobei:
die vaskuläre technische Gitterstruktur (80; 280; 380; 480) mindestens ein Einlassloch (88) und mindestens ein Auslassloch (90) aufweist, die das Fluid in die und aus der hohlen vaskulären Struktur (80; 280; 380; 480) leiten, und
die hohle vaskuläre Struktur (80; 280; 380; 480) hohle Durchgänge (96) umfasst, die sich durch Knoten (92) und Zweige (94) der vaskulären technischen Gitterstruktur (80; 280; 380; 480) erstrecken, und Luftstrom (68) innerhalb der hohlen Durchgänge (96) der Knoten (92) und der Zweige (94) zirkuliert werden kann, um die Komponente (50) in dem Raum zwischen den Wänden (82, 84) zu kühlen und von jedem der hohlen Zweige (96) fließen und sich in Knoten (92) vereinigen kann, die als Plenum für den Luftstrom (68) dienen, um zum nächsten Satz hohler Zweige (96) und Knoten (92) umverteilt zu werden, **dadurch gekennzeichnet, dass**:
Luftstrom (68) über und um die Knoten (92) und Zweige (94) der vaskulären technischen Gitterstruktur (80) geleitet werden kann.

2. Die Komponente nach Anspruch 1, wobei die Knoten (92) und Zweige (94) gleichmäßig über die vaskuläre technische Gitterstruktur (80; 280; 380; 480) verteilt sind.

3. Die Komponente nach Anspruch 1, wobei die Knoten (92) und Zweige (94) ungleichmäßig über die vaskuläre technische Gitterstruktur (80; 280; 380; 480) verteilt sind.

4. Die Komponente nach Anspruch 2 oder 3, wobei die Zweige (94):
orthogonal zu den Knoten (92) sind, oder
nicht-orthogonal zu den Knoten (92) sind.

5. Die Komponente nach einem der vorhergehenden Ansprüche, wobei die vaskuläre technische Gitterstruktur (80; 280; 380; 480) entweder eine Gleichstrom-vaskuläre technische Gitterstruktur (80; 280; 380; 480) oder eine Gegenstrom-vaskuläre technische Gitterstruktur (80; 280; 380; 480) ist.

6. Die Komponente nach einem der vorhergehenden Ansprüche, wobei das Auslassloch (90) ein Filmkühlloch ist.

7. Die Komponente nach einem der vorhergehenden Ansprüche, wobei die Wand Teil einer Schaufel, einer Leitschaufel, einer Schaufelaußenluftdichtung (BOAS), einer Brennkammerplatte oder einer Turbinenauslassgehäuseverkleidung eines Gasturbinentriebwerks ist.

8. Die Komponente nach einem der vorhergehenden Ansprüche, wobei das mindestens eine Einlassloch (88) eine andere Form und Geometrie aufweist als das mindestens eine Auslassloch (90).

9. Ein Verfahren zur Herstellung einer Komponente (50), umfassend die Schritte:
Bilden einer vaskulären technischen Gitterstruktur (80; 280; 380; 480) zwischen ersten und zweiten Wänden (82, 84) der Komponente (50), wobei die vaskuläre technische Gitterstruktur (80; 280; 380; 480) eine hohle Gitterstruktur aufweist und mindestens ein Einlassloch (88) und mindestens ein Auslassloch (90) umfasst, die ein Fluid in die und aus der vaskulären technischen Gitterstruktur (80; 280; 380; 480) leiten, wobei die hohle vaskuläre Struktur (80; 280; 380; 480) hohle Durchgänge (96) umfasst, die sich durch Knoten (92) und Zweige (94) der vaskulären technischen Gitterstruktur (80; 280; 380; 480) erstrecken, und Luftstrom (68) innerhalb der hohlen Durchgänge (96) der Knoten (92) und der Zweige (94) zirkuliert werden kann, um die Komponente (50) in dem Raum zwischen den Wänden (82, 84) zu kühlen und von jedem der hohlen Zweige (96) fließen und sich in Knoten (92) vereinigen kann, die als Plenum für den Luftstrom (68) dienen, um zum nächsten Satz hohler Zweige (96) und Knoten (92) umverteilt zu werden, und Luftstrom (68) über und um die Knoten (92) und Zweige (94) der vaskulären technischen Gitterstruktur (80) geleitet werden kann.

10. Das Verfahren nach Anspruch 9, wobei der Schritt des Bildens der vaskulären technischen Gitterstruktur umfasst:
Bilden eines Kerns unter Verwendung eines additiven Fertigungsverfahrens; und
Verwenden des Kerns zum Gießen der vaskulären technischen Gitterstruktur (80; 280; 380; 480).

## Revendications

1. Un composant (50), comprenant :
une première paroi (82) ;
une deuxième paroi (84) espacée de la première paroi (82) ;
une structure en treillis vasculaire conçue (80 ; 280 ; 380 ; 480) s'étendant entre ladite première paroi (82) et ladite deuxième paroi (84), ladite structure en treillis vasculaire conçue (80 ; 280 ; 380 ; 480) définissant une structure vasculaire creuse configurée pour faire circuler un fluide à travers ladite structure en treillis vasculaire conçue (80 ; 280 ; 380 ; 480), dans laquelle :
ladite structure en treillis vasculaire conçue (80 ; 280 ; 380 ; 480) a au moins un trou d'entrée (88) et au moins un trou de sortie (90) qui font circuler le fluide dans et hors de ladite structure vasculaire creuse (80 ; 280 ; 380 ; 480), et
ladite structure vasculaire creuse (80 ; 280 ; 380 ; 480) comprend des passages creux (96) qui s'étendent à travers des nœuds (92) et des branches (94) de ladite structure en treillis vasculaire conçue (80 ; 280 ; 380 ; 480), et un flux d'air (68) peut être mis en circulation à l'intérieur des passages creux (96) des nœuds (92) et des branches (94) pour refroidir le composant (50) dans l'espace entre les parois (82, 84) et peut s'écouler de chacune des branches creuses (96) et se rassembler dans les nœuds (92), qui servent de plénum pour que le flux d'air (68) soit redistribué vers l'ensemble suivant de branches creuses (96) et de nœuds (92),
**caractérisé en ce que** :
le flux d'air (68) peut circuler sur et autour des nœuds (92) et des branches (94) de la structure en treillis vasculaire conçue (80).

2. Le composant selon la revendication 1, dans lequel lesdits nœuds (92) et branches (94) sont uniformément répartis dans toute ladite structure en treillis vasculaire conçue (80 ; 280 ; 380 ; 480).

3. Le composant selon la revendication 1, dans lequel lesdits nœuds (92) et branches (94) sont non uniformément répartis dans toute ladite structure en treillis vasculaire conçue (80 ; 280 ; 380 ; 480).

4. Le composant selon la revendication 2 ou 3, dans lequel lesdites branches (94) sont :
orthogonales auxdits nœuds (92), ou
non orthogonales auxdits nœuds (92).

5. Le composant selon l'une quelconque des revendications précédentes, dans lequel ladite structure
en treillis vasculaire conçue (80 ; 280 ; 380 ; 480) est l'une d'une structure en treillis vasculaire conçue à co-flux (80 ; 280 ; 380 ; 480) et d'une structure en treillis vasculaire conçue à contre-flux (80 ; 280 ; 380 ; 480).

6. Le composant selon l'une quelconque des revendications précédentes, dans lequel ledit trou de sortie
(90) est un trou de refroidissement par film.

7. Le composant selon l'une quelconque des revendications précédentes, dans lequel ladite paroi fait partie
d'une aube, d'une ailette, d'un joint d'étanchéité d'aube externe (BOAS), d'un panneau de chambre de combustion ou d'un revêtement de carter d'échappement de turbine d'un moteur à turbine à gaz.

8. Le composant selon l'une quelconque des revendications précédentes, dans lequel ledit au moins un
trou d'entrée (88) a une forme et une géométrie différentes dudit au moins un trou de sortie (90).

9. Un procédé de fabrication d'un composant (50), comprenant les étapes consistant à :
former une structure en treillis vasculaire conçue (80 ; 280 ; 380 ; 480) entre les première et deuxième parois (82, 84) du composant (50), ladite structure en treillis vasculaire conçue (80 ; 280 ; 380 ; 480) ayant une structure en treillis creuse et comprenant au moins un trou d'entrée (88) et au moins un trou de sortie (90) qui font circuler un fluide dans et hors de ladite structure en treillis vasculaire conçue (80 ; 280 ; 380 ; 480), dans lequel ladite structure vasculaire creuse (80 ; 280 ; 380 ; 480) comprend des passages creux (96) qui s'étendent à travers des nœuds (92) et des branches (94) de ladite structure en treillis vasculaire conçue (80 ; 280 ; 380 ; 480), et un flux d'air (68) peut être mis en circulation à l'intérieur des passages creux (96) des nœuds (92) et des branches (94) pour refroidir le composant (50) dans l'espace entre les parois (82, 84) et peut s'écouler de chacune des branches creuses (96) et se rassembler dans les nœuds (92), qui servent de plénum pour que le flux d'air (68) soit redistribué vers l'ensemble suivant de branches creuses (96) et de nœuds (92), et le flux d'air (68) peut circuler sur et autour des nœuds (92) et des branches (94) de la structure en treillis vasculaire conçue (80).

10. Le procédé selon la revendication 9, dans lequel l'étape de formation de la structure en treillis vasculaire conçue comprend :
la formation d'un noyau en utilisant un procédé de fabrication additive ; et
l'utilisation du noyau pour couler la structure en treillis vasculaire conçue (80 ; 280 ; 380 ;
480).
